# EUROPÄISCHE PATENTSCHRIFT

(11) **EP 2 229 295 B1**
(45) Veröffentlichungstag und Bekanntmachung des Hinweises auf die Patenterteilung: **25.05.2011**
(21) Anmeldenummer: 08869934.3
(22) Anmeldetag: 19.11.2008
(51) Int. Cl.: B60R 21/0132

(54) **VERFAHREN UND STEUERGERÄT ZUR ANSTEUERUNG VON PERSONENSCHUTZMITTELN FÜR EIN FAHRZEUG**
METHOD AND CONTROLLER FOR ACTUATING PERSONAL PROTECTION MEANS FOR A VEHICLE
PROCÉDÉ ET APPAREIL DE COMMANDE POUR LA COMMANDE DE MOYENS DE PROTECTION DE PERSONNE POUR UN VÉHICULE

(30) Priorität: 07.01.2008 DE 102008003339
(43) Veröffentlichungstag der Anmeldung: 22.09.2010
(73) Patentinhaber: Robert Bosch GmbH, 70442 Stuttgart (DE)
(72) Erfinder: KAERNER, Christof, 73095 Albershausen (DE); JUDALET, Vincent, 71638 Ludwigsburg (DE); DOERR, Alfons, 70597 Stuttgart (DE); KOLATSCHEK, Josef, 71263 Weil der Stadt (DE); HIEMER, Marcus, 71701 Schwieberdingen (DE); KOERNER, Olaf, 71640 Ludwigsburg (DE)
(86) Internationale Anmeldenummer: PCT/EP2008/065791
(87) Internationale Veröffentlichungsnummer: WO 2009/086984

(56) Entgegenhaltungen:
- DE-A1- 4 424 551
- DE-A1- 10 360 893
- DE-A1-102005 060 055

## Beschreibung

### Stand der Technik

Die Erfindung betrifft ein Verfahren bzw. ein Steuergerät zur Ansteuerung von Personenschutzmitteln für ein Fahrzeug nach der Gattung der unabhängigen Patentansprüche.

Aus der gattungsbildenden DE 10 2005 060 055 A1 ist bereits bekannt ein Verfahren zum Bestimmen der Position eines Fahrzeugsitzes. Für dieses Verfahren werden die Signale eines Sensors über mehrere Schritte hinweg verarbeitet und schlussendlich aus den verarbeiteten Signalen Merkmale extrahiert. Die Merkmale fließen zusammen mit weiteren Signalen weiterer Sensoren in ein Airbag-Steuergerät zur Steuerung desselben ein.

Aus DE 44 24 551 A1 ist bereits bekannt eine Auslösevorrichtung für ein Fahrzeugsicherheitssystem die versehen ist, mit einem Beschleunigungssensor, der der gemessenen Beschleunigung entsprechende Signale erzeugt, und mit einer die Signale verarbeitenden Schaltung, die bei Überschreiten eines vorgegebenen, für eine Aufprall typischen Schwellwerts ein Auslösesignal abgibt. Der Auslöseschwellwert wird mit einem Zählerstand eines Zählers verglichen, der durch eine Schwellwertschaltung, der Beschleunigungssignale zugeführt werden, mit mindestens zwei fahrzeugtypischen Schwellwerten aktiviert wird.

Aus DE 103 60 893 A1 ist es bereits bekannt, ein Verfahren zur Ansteuerung von Personenschutzmitteln vorzusehen, bei dem eine Zeitkopplung vermieden wird. Es werden Schwellwertflächen verwendet, die durch Wertepaare aus Geschwindigkeitsabbau und einer Verzögerung bestimmt werden. Diesen Wertepaaren wird nämlich im Vorhinein eine Vorverlagerung zugeordnet, sodass im dreidimensionalen Raum damit eine Fläche definiert ist.

### Offenbarung der Erfindung

Das erfindungsgemäße Verfahren bzw. das erfindungsgemäße Steuergerät zur Ansteuerung von Personenschutzmitteln für ein Fahrzeug mit den Merkmalen der unabhängigen Patentansprüche haben demgegenüber den Vorteil, dass die Ansteuerung der Personenschutzmittel nicht allein in Abhängigkeit von einer einmaligen Schwellenüberschreitung, sondern aufgrund eines mehrfachen, unterschiedlich gewichteten Überschreitens eines Schwellwerts erfolgt. Damit ist es möglich, die Auslöseschwelle tiefer zu legen als es vorher möglich war. Insbesondere sind damit bessere Auslösezeiten möglich. Weiterhin wird trotz eines tieferen Schwellwerts, der zur Ansteuerung überschritten werden muss, eine robuste Ansteuerung ermöglicht. Weitere Ausgestaltungen der Erfindung sind in den Unteransprüchen enthalten.

Die zweifache Überschreitung eines Schwellwerts ergibt sich daraus, dass zwei verschiedene Schwellwerte überschritten werden müssen, um eine Ansteuerung zu erhalten. Zum einen ein erster Schwellwert, beispielsweise in einem Beschleunigungsgeschwindigkeitsdiagramm, und ein weiterer Schwellwert, der von einer gewichteten Differenz aus dem ersten Schwellwertvergleich, wobei diese gewichtete Differenz noch weiterhin signalverarbeitet wurde, stattfindet.

Vorliegend bedeutet ein Steuergerät ein elektrisches Gerät, das ein Sensorsignal verarbeitet und in Abhängigkeit davon ein Steuersignal für die Personenschutzmittel wie Airbags, Gurtstraffer, aber auch aktive Personenschutzmittel wie Bremsen oder eine Fahrdynamikregelung erzeugt. Dabei bedeutet das Ansteuern dieser Personensschutzmittel, dass diese Personenschutzmittel aktiviert werden.

Schnittstelle bedeutet vorliegend eine hard- und/oder softwaremäßige Ausführung, um ein Sensorsignal bereitzustellen. Diese Schnittstelle kann in einer hardwaremäßigen Ausführung, beispielsweise als integrierter Schaltkreis oder eine Mehrzahl von integrierten und diskreten Schaltkreisen, bestehen. Es ist möglich, dass die Schnittstelle auch als Softwaremodul vorliegt, beispielsweise auf einem Mikrocontroller oder einem anderen prozessorartigen elektrischen Baustein.

Das wenigstens eine Sensorsignal kann ein einzelnes Rohdatensignal oder eine Mehrzahl von solchen Signalen oder ein vorverarbeitetes Signal, das beispielsweise geglättet wurde, sein. Bei dem Sensorsignal kann es sich um ein Beschleunigungssignal oder ein davon abgeleitetes Signal, um ein Körperschallsignal oder ein davon abgeleitetes Signal, ein Luftdrucksignal oder ein davon abgeleitetes Signal oder ein Umfeldsignal oder ein davon abgeleitetes Signal handeln. Zu Umfeldsignalen gehören beispielsweise die Relativgeschwindigkeit, die Aufprallgeschwindigkeit und andere mit einer Umfeldsensorik erfassbare Daten. Damit ergibt sich, dass unter einer Unfallsensorik nicht nur eine Aufprallsensorik wie eine Beschleunigungs-, Körperschall- oder Luftdrucksensorik, sondern auch eine Umfeldsensorik zu verstehen ist. Zu solchen Umfeldsensoriken gehören neben der Radarsensorik die Video-, Lidar und Ultraschallsensorik. Weitere bekanntere Sensoriken können hier ebenfalls entsprechend verwendet werden.

Unter einer Auswerteschaltung kann eine hard- und/oder softwaremäßige Ausprägung verstanden werden, wobei diese Auswerteschaltung einzelne Module wie das Merkmalsmodul, das Differenzmodul, das Gewichtungsmodul und das Vergleichsmodul aufweist. Diese Module können ebenfalls hard- und/oder softwaremäßig ausgeführt sein. Diese Modularität ermöglicht eine effiziente Aufteilung der einzelnen Aufgaben, um das erfindungsgemäße Verfahren abzuarbeiten. Die Auswerteschaltung kann beispielsweise auf einem Prozessor wie einem Mikrocontroller oder Mikroprozessor oder auf einem ASIC oder auch aus diskret aufgebauten Bauelementen bestehen. Auch Mehrkernrechner sind vorliegend möglich.

Das Merkmalsmodul erzeugt beispielsweise die Merkmale aus dem wenigstens einen Sensorsignal durch ein- oder zweifache Integration bzw. Mittelwertbildung bzw. Glättung.

Das Differenzmodul bildet eine Differenz zwischen dem Merkmalsvektor, der aus den Merkmalen gebildet wird und einem ersten Schwellwert. Dieser Schwellwert kann adaptiv oder fest vorgegeben ausgeführt sein. Auch die Art der Differenz kann unterschiedlich sein. Sie kann selbst ein Vektor sein, eine Fläche oder auch nur in einer Dimension ein Abstand zwischen dem Schwellwert und dem Vektor.

Das Gewichtungsmodul gewichtet die Differenz zwischen dem Schwellwert und dem Merkmalsvektor in Abhängigkeit von wenigstens einem der Merkmale. Dies kann beispielsweise, wie es aus den abhängigen Ansprüchen hervorgeht, durch Multiplikation oder andere mathematische Verfahren realisiert sein.

Das Vergleichsmodul führt einen zweiten Schwellwertvergleich einer von der gewichteten Differenz abgeleiteten Größe mit einem zweiten Schwellwert durch. Auch dieser zweite Schwellwert kann, wie aus den abhängigen Ansprüchen hervorgeht, adaptiv oder fest vorgegeben sein. Durch diese zweistufige Schwellwertabfrage wird ein robustes Ansteuerungsverfahren realisiert.

Die Ansteuerschaltung ist beispielsweise mit der Schnittstelle auf einem System-ASIC integriert. Auf diesem System-ASIC können verschiedene Funktionen des Steuergeräts integriert sein. Im Falle der Ansteuerung aktiver Personenschutzmittel wie einer Fahrdynamikregelung ist die Ansteuerschaltung als Schnittstelle zur Datenübertragung, beispielsweise als Buscontroller ausgebildet.

Durch die in den abhängigen Ansprüchen aufgeführten Maßnahmen und Weiterbildungen sind vorteilhafte Verbesserungen des in den unabhängigen Patentansprüchen angegebenen Verfahrens bzw. Steuergeräts zur Ansteuerung von Personenschutzmitteln für ein Fahrzeug möglich.

Es ist dabei vorteilhaft, dass die Größe durch eine Integration der gewichteten Differenz erzeugt wird. Diese Integration kann in vielfältiger Weise realisiert sein. Beispielsweise kann diese Integration als ein Fensterintegral, als Summenbildung, als gewichtete Summenbildung oder durch Anwendung anderer diskreter Integrationsverfahren realisiert sein. Optional kann das integrierte Signal auf positive Werte begrenzt werden.

Weiterhin ist es vorteilhaft, dass die Gewichtung durch eine Multiplikation der Differenz mit einem der Merkmale durchgeführt wird.

Darüber hinaus ist es vorteilhaft, dass der zweite Schwellwert sich in Abhängigkeit von einem der Merkmale und/oder der Zeit ändert. Damit kann auf spezielle, aus Fahrversuchen bekannte Situationen eingegangen werden, um deren Verlauf, der bekannt ist, zu berücksichtigen. Dies führt zu einer robusten Ansteuerung der Personenschutzmittel.

Es ist weiterhin vorteilhaft, dass der Merkmalsvektor aus einer Beschleunigung und einer Geschwindigkeit als den Merkmalen gebildet ist. Die Verarbeitung und Interpretation solcher Merkmale ist aufgrund der großen Erfahrung mit diesen Merkmalen treffend und robust.

Es ist weiterhin vorteilhaft, dass als das eine der Merkmale die Beschleunigung verwendet wird. Die Beschleunigung bzw. Verzögerung, die bei einem Unfall auftritt, weist eine Vielzahl von Informationen bezüglich des Aufpralls auf und gibt so ein sinnvolles Merkmal für die Beurteilung, ob ein Ansteuerungsfall vorliegt oder nicht.

Der erste Schwellwert kann vorteilhafterweise zwischen einem Auslösefall und einem Nicht-Auslösefall oder zwischen Crashtypen oder zwischen Crashschweren unterscheiden. Der Nicht-Auslösefall ist ein Aufprall, bei dem keine Auslösung notwendig ist, da dieser Nicht-Auslösefall beispielsweise ein Aufprall ist mit geringer Geschwindigkeit. Die Beurteilung nach Crashtypen ermöglicht eine genaue Analyse und Gegenmaßnahmen, die hilfreich sind, um den Fahrzeuginsassen optimalen Schutz zu bieten. Auch die Unterscheidung zwischen Crashschweren ermöglicht eine adaptive Anpassung der Ansteuerung der Personenschutzmittel. Unter einer Crashschwere ist zu verstehen, welche Kraft auf den Fahrzeuginsassen einwirkt. Die Crashschwere kann damit beispielsweise aus den Merkmalen bestimmt werden.

Ausführungsbeispiele der Erfindungen sind in der Zeichnung dargestellt und werden in der nachfolgenden Beschreibung näher erläutert.

Es zeigen Figur 1 ein Blockschaltbild des erfindungsgemäßen Steuergeräts im Fahrzeug mit angeschlossenen Komponenten, Figur 2 ein Flussdiagramm des erfindungsgemäßen Verfahrens und Figur 3 zwei Beschleunigungsgeschwindigkeitsdiagramme mit und ohne Verwendung der Erfindung.

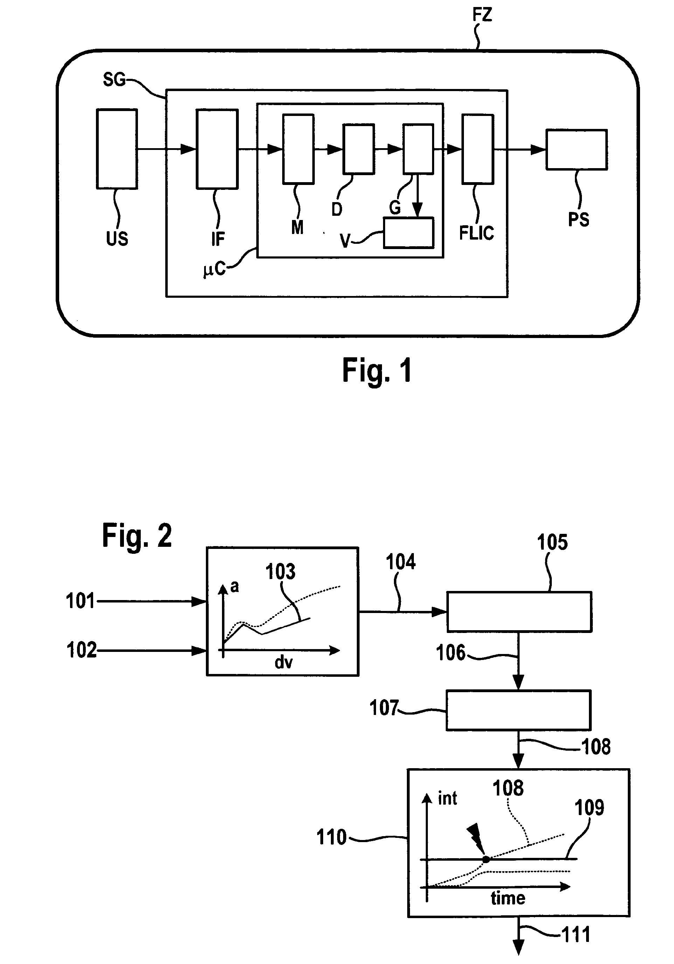

Figur 1 zeigt in einem Blockschaltbild ein erfindungsgemäßes Steuergerät SG in einem Fahrzeug FZ mit den angeschlossenen Komponenten, nämlich der Unfallsensorik US und den Personenschutzmitteln PS. Der Einfachheit halber sind nur die Komponenten dargestellt, die für das Verständnis der Erfindung notwendig sind. Zum realen Betrieb des Steuergeräts SG sind noch weitere Komponenten wie eine Energieversorgung u.s.w. notwendig, wobei diese Komponenten der Einfachheit halber weggelassen wurden.

Das Steuergerät SG, beispielsweise aus einem Metall- und/oder Kunststoffgehäuse, weist eine Schnittstelle IF als integrierten Baustein oder Teil eines System-ASICs auf. An diese Schnittstelle ist eine Unfallsensorik US angeschlossen, die sich außerhalb des Steuergeräts SG befindet. Diese Unfallsensorik US kann eine Vielzahl von Sensoren aufweisen, beispielsweise Beschleunigungssensoren, Körperschall-, Luftdruck-, Umfeldsensoren und andere relevante Sensoren, um eine Gefahrensituation zu ermitteln. Die Übertragung der Daten von der Unfallsensorik US kann beispielsweise über einen Bus oder eine Punkt-zu-Punkt-Verbindung erfolgen. Üblicherweise wird hierfür eine Stromschnittstelle verwendet, die sich als besonders robust erwiesen hat. Die Schnittstelle I F formatiert die Daten, die von der Unfallsensorik US stammen, in ein für den Mikrocontroller µC als von der Auswerteschaltung lesbares Format um. Es ist möglich, dass sich auch innerhalb des Steuergeräts SG zumindest Teile der Unfallsensorik befinden.

Das Sensorsignal von der Unfallsensorik US wird demnach durch die Schnittstelle IF der Auswerteschaltung µC bereitgestellt. Dort wird aus dem Sensorsignal im Merkmalsmodul M eine Gewinnung von Merkmalen durchgeführt, wie beispielsweise der Beschleunigung und/oder der Geschwindigkeit aus dem Beschleunigungssignal als dem Sensorsignal. Durch das Modul D wird eine Differenz zwischen einem aus den Merkmalen gebildeten Merkmalsvektor und einem Schwellwert gebildet. Diese Differenz wird in einem Gewichtungsmodul G gewichtet und signalverarbeitet, sodass dann das Vergleichsmodul V diese signalverarbeitete Differenz, die auch gewichtet wurde, mit einem weiteren Schwellwertvergleich, um festzustellen, ob ein Ansteuerungsfall vorliegt oder nicht. Ist das nicht der Fall, passiert nichts, ist es jedoch der Fall, dann wird die Ansteuerung der Personenschutzmittel angeordnet, sodass die Ansteuerungsschaltung FLIC, die beispielsweise Teil eines System-ASICs für das Steuergerät SG sein kann, die Personenschutzmittel entsprechend aktiviert, beispielsweise auch über Funk.

Kennzeichnend ist demnach, dass zweimal ein Schwellwertvergleich durchgeführt wird. Dies wird näher in Figur 2 im Flussdiagramm des erfindungsgemäßen Verfahrens erläutert. Die Beschleunigung 101 und der Geschwindigkeitsabbau 102, jeweils bezeichnet mit a bzw. dv, gehen als Eingangsgrößen in den Block 103 ein, in dem der erste Schwellwertvergleich stattfindet. Ein Vektor aus der Beschleunigung 101 und dem Geschwindigkeitsabbau 102 wird gebildet, und dieser Vektor wird mit einem vorgegebenen Schwellwert verglichen. Die Differenz zwischen dem Vektor und dem Schwellwert wird gebildet. Dies wird als Ausgangssignal 104 bezeichnet. Das Ausgangssignal 104 wird im Block 105 gewichtet, beispielsweise in Abhängigkeit von der Beschleunigung. Das so gewichtete Signal 106 wird im Integrationsblock 107 ein- oder zweimal integriert.

Die integrierte gewichtete Differenz 108 geht auf einen weiteren Schwellwertvergleich 110. Hier wird das Signal 108 mit dem Schwellwert 109 verglichen. Es ist möglich, diesen Schwellwert 109 zeitlich oder in Abhängigkeit von einem Merkmal veränderlich zu gestalten. Wie angegeben, übertrifft das Signal 108 diesen zweiten Schwellwert 109. Damit liegt ein Auslösefall vor, weil beide Schwellwerte überschritten wurden, sowohl 103 als auch 109.

Wurde bereits in Verfahrensschritt 103 festgestellt, dass keine positive Differenz zwischen dem Schwellwert und dem Merkmalsvektor besteht, dann wird bereits hier das Verfahren abgebrochen.

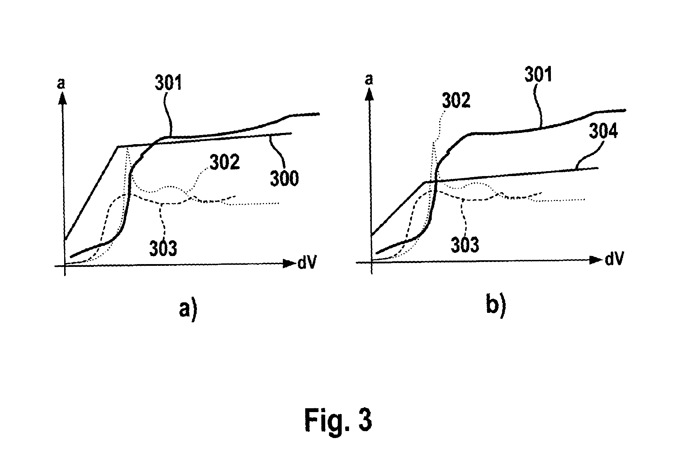

Figur 3 erläutert in den Beschleunigungs-Geschwindigkeits-Diagrammen A und B die Auswirkung, die das erfindungsgemäße Verfahren auf die Auslöseperformance aufweist. Im Diagramm A ist der Fall vor der Implementierung der Erfindung gezeigt. Die Schwelle 300 ist relativ hoch angeordnet, sodass der Fire Crash 301 diese Schwelle erst sehr spät überschreitet. Die NoFire Crashes 302 und 303 können diese robuste Schwelle 300 nicht überschreiten.

Im Diagramm B wird jedoch gezeigt, dass die Schwelle 304 nun tiefer angeordnet ist, sodass sowohl der Fire Crash 301 als auch der NoFire Crash 302 die Schwelle 304 überschreiten. Der NoFire Crash 303 kann wiederum diese Schwelle 304 auch nicht überschreiten. Da jedoch der NoFire Crash 302 die Schwelle 304 nur einmal überschreitet, dann wieder unterschreitet, ist kein Crash vorliegend gegeben.

## Patentansprüche

1. Verfahren zur Ansteuerung von Personenschutzmitteln (PS) für ein Fahrzeug (FZ) bei dem Merkmale aus wenigstens einem Sensorsignal einer Unfallsensorik (US) erzeugt werden,
**gekennzeichnet durch** die weiteren Verfahrensschritte:
- Bilden einer Differenz eines Merkmalsvektors mit einem ersten Schwellwert;
- Gewichten der Differenz in Abhängigkeit von wenigstens einem Merkmal;
- Ansteuern der Personenschutzmittel (PS) in Abhängigkeit von einem Vergleich einer von der gewichteten Differenz abgeleiteten Größe mit einem zweiten Schwellwert.

2. Verfahren nach Anspruch 1, **dadurch gekennzeichnet, dass** die Größe durch eine Integration der gewichteten Differenz erzeugt wird.

3. Verfahren nach Anspruch 1 oder 2, **dadurch gekennzeichnet, dass** die Gewichtung durch eine Multiplikation der Differenz mit einem der Merkmale durchgeführt wird.

4. Verfahren nach einem der vorhergehenden Ansprüche, **dadurch gekennzeichnet, dass** der zweite Schwellwert sich in Abhängigkeit von einem Merkmal und/oder der Zeit ändert.

5. Verfahren nach Anspruch 1, **dadurch gekennzeichnet, dass** der Merkmalsvektor aus einer Beschleunigung und einer Geschwindigkeit als den Merkmalen gebildet wird.

6. Verfahren nach einem der Ansprüche 3 oder 4, **dadurch gekennzeichnet, dass** als das eine Merkmal die Beschleunigung verwendet wird.

7. Verfahren nach einem der vorherigen Ansprüche, **dadurch gekennzeichnet, dass** der erste Schwellwert zwischen einem Auslösefall und einem Nicht-Auslösefall unterscheidet.

8. Verfahren nach einem der Ansprüche 1 bis 6, **dadurch gekennzeichnet, dass** der erste Schwellwert zwischen Crashtypen unterscheidet.

9. Verfahren nach einem der Ansprüche 1 bis 6, **dadurch gekennzeichnet, dass** der erste Schwellwert zwischen Crashschweren unterscheidet.

10. Steuergerät (SG) zur Ansteuerung von Personenschutzmitteln (PS) für ein Fahrzeug (FZ) mit
- einer Schnittstelle (IF), die wenigstens ein Sensorsignal einer Unfallsensorik (US) bereitstellt,
**dadurch gekennzeichnet, dass**
das Steuergerät (SG) einschließt:
- eine Auswerteschaltung (µC), die ein Merkmalsmodul (M) zum Erzeugen von Merkmalen aus dem wenigstens einen Sensorsignal, ein Differenzmodul (D) zum Bilden einer Differenz eines Merkmalsvektors mit einem ersten Schwellwert, ein Gewichtungsmodul (G) zum Gewichten der Differenz in Abhängigkeit von wenigstens einem der Merkmale, ein Vergleichsmodul (V) zum Vergleich einer von der gewichteten Differenz abgeleiteten Größe mit einem zweiten Schwellwert aufweist;
- eine Ansteuerschaltung, die in Abhängigkeit von dem zweiten Schwellwertvergleich die Personenschutzmittel (PS) ansteuert.

## Claims

1. Method for actuating personal protection means (PS) for a vehicle (FZ), in which features from at least one sensor signal of an accident sensor system, (US) are generated,
**characterized by** the further method steps:
- formation of a difference between a feature vector and a first threshold value;
- weighting of the difference as a function of at least one feature;
- actuation of the personal protection means (PS) as a function of a comparison of a variable derived from the weighted difference with a second threshold value.

2. Method according to Claim 1, **characterized in that** the variable is generated by integration of the weighted difference.

3. Method according to Claim 1 or 2, **characterized in that** the weighting is carried out by multiplying the difference by one of the features.

4. Method according to one of the preceding claims, **characterized in that** the second threshold value changes as a function of a feature and/or of the time.

5. Method according to Claim 1, **characterized in that** the feature vector is formed from an acceleration and a speed as the features.

6. Method according to one of Claims 3 and 4, **characterized in that** the acceleration is used as the one feature.

7. Method according to one of the preceding claims, **characterized in that** the first threshold value differs between a triggering case and a non-triggering case.

8. Method according to one of Claims 1 to 6, **characterized in that** the first threshold value differs between crash types.

9. Method according to one of Claims 1 to 6, **characterized in that** the first threshold value differs between degrees of severity of crashes.

10. Control unit (SG) for actuating personal protection means (PS) for a vehicle (FZ), having
- an interface (IF) which makes available at least one sensor signal of an accident sensor system (US),
**characterized in that**
the control unit (SG) includes:
- an evaluation circuit (µC), which has a feature module (M) for generating features from the at least one sensor signal, a difference-forming module (D) for forming a difference between a feature vector and a first threshold value, a weighting module (G) for weighting the difference as a function of at least one of the features, and a comparison module (V) for comparing a variable derived from the weighted difference with a second threshold value; and
- an actuation circuit which actuates the personal protection means (PS) as a function of the second threshold value comparison.

## Revendications

1. Procédé de commande de moyens de protection de personne (PS) pour un véhicule (FZ) dans lequel les caractéristiques sont produites par au moins un signal de capteur provenant d'un système sensoriel de détection d'accident (US) ;
**caractérisé par** les étapes de procédé suivantes :
calcul d'une différence entre un vecteur caractéristique et une première valeur seuil ;
pondération de la différence en fonction d'au moins une caractéristique ;
pilotage des moyens de protection de personne (PS) en fonction d'une comparaison entre une taille déduite de la différence pondérée et une deuxième valeur seuil.

2. Procédé selon la revendication 1, **caractérisé en ce que** la taille est calculée en intégrant la différence pondérée.

3. Procédé selon la revendication 1 ou 2, **caractérisé en ce que** la pondération est réalisée en multipliant la différence par une des caractéristiques.

4. Procédé selon l'une quelconque des revendications précédentes, **caractérisé en ce que** la deuxième valeur seuil varie en fonction d'une caractéristique et/ou du temps.

5. Procédé selon la revendication 1, **caractérisé en ce que** le vecteur caractéristique est formé à partir d'une accélération et d'une vitesse servant de caractéristiques.

6. Procédé selon l'une quelconque des revendications 3 ou 4, **caractérisé en ce que** la caractéristique utilisée est l'accélération.

7. Procédé selon l'une quelconque des revendications précédentes, **caractérisé en ce que** la première valeur seuil fait la distinction entre un cas de déclenchement et un cas de non-déclenchement.

8. Procédé selon l'une quelconque des revendications 1 à 6, **caractérisé en ce que** la première valeur seuil fait la distinction entre les différents types de choc.

9. Procédé selon l'une quelconque des revendications 1 à 6, **caractérisé en ce que** la première valeur seuil fait la distinction entre les différents seuils de choc.

10. Appareil de commande (SG) pour commander des moyens de protection de personne (PS) pour un véhicule (FZ) doté :
d'une interface (IF) mettant à disposition au moins un signal de capteur d'un système sensoriel de détection d'accident (US) ;
**caractérisé en ce que** l'appareil de commande (SG) inclut :
un circuit d'analyse (µC) comportant un module de détermination de caractéristiques (M) pour produire des caractéristiques à partir de l'au moins un signal de capteur, un module de calcul de différence (D) pour calculer la différence entre un vecteur caractéristique et une première valeur seuil, un module de pondération une des caractéristiques, un module de comparaison (V) pour comparer une taille déduite de la différence pondérée avec une deuxième valeur seuil ;
un circuit de commande qui commande les moyens de protection de personne (PS) en fonction de la deuxième comparaison de valeur seuil.
